# EUROPEAN PATENT SPECIFICATION

(11) **EP 2 846 294 B1**
(45) Date of publication and mention of the grant of the patent: **21.11.2018**
(21) Application number: 14192385.4
(22) Date of filing: 16.04.2010
(51) Int. Cl.: G06K 17/00, G06K 19/077, D06F 33/00, D06F 39/00, H05B 6/68, A47L 15/00

(54) **SYSTEM AND METHOD FOR USING THE SYSTEM**
System und Verfahren zur Verwendung des systems
Système et procédé d'utilisation du système

(30) Priority: 15.05.2009 IT RN20090022
(43) Date of publication of application: 11.03.2015
(62) Divisional of application: 10717757.8
(73) Proprietor: Whirlpool EMEA S.p.A., 20016 Pero (MI) (IT)
(72) Inventor: Milani, Monica, 60035 Jesi (AN) (IT)
(74) Representative: Spina, Alessandro

(56) References cited:
- EP-A- 1 520 925
- EP-A1- 1 978 426
- WO-A-00/49838
- US-A1- 2004 018 827
- US-A1- 2004 077 388
- US-A1- 2007 200 870

## Description

### Technical Field

This invention relates to a system comprising a household electrical appliance and means for interacting with a household electrical appliance.

### Prior Art

Household electrical appliances are known which comprise a user interface equipped with control switches, selectors, pushbuttons or touch screens. This user interface is located on the outer enclosure of the household electrical appliance in a position accessible to the user.

Document EP1978426A1 discloses an household electrical appliance having a control panel including two different configurations, for making user interfaces directly accessible to users, respectively a standard and a simplified one. A housing cavity houses the control panel.

Document US20040018827A1 discloses a domestic electrical machine having communications interface with central computing and control unit coupled to communications unit for wireless communications with external station.

Document US20070200870A1 discloses a domestic appliance for washing/drying clothes which has an electronic album function and a monitor device for images, fastened in a set position on a washing machine; the monitor device can be designed as removable so that it stays separate from the washing-machine.

Document EP1520925A discloses a household appliance comprising a first electronic device for communicating with a container for washing aid, in particular detergent; according to the invention the container comprises an electronic device storing information about said washing aid and useful for the choice of an optimal treatment program.

The presence of this interface is not free of disadvantages.

First of all, it occupies a considerable portion of the outer enclosure which might be used otherwise.

Further, to cater for the ever increasing technological content of household electrical appliances, the user interface tends to have so many controls and switches that all but the most well-informed users will very likely be confused.

In this context, the technical purpose which forms the basis of this invention is to propose a household electrical appliance and the related interaction means that overcome the above mentioned drawbacks of the prior art.

### Disclosure of the Invention

In particular, this invention has for an aim to provide a system comprising a household electrical appliance and the related interaction means capable of optimizing space.

Another aim of the invention is to provide a system comprising a household electrical appliance and the related interaction means which are particularly intuitive and user-friendly.

Another aim of the invention is to provide a system comprising a household electrical appliance and the related interaction means which allow a particularly high degree of flexibility of use to be achieved.

Another aim of the invention is to provide a method for controlling a household electrical appliance that is intuitive even for users having little experience with the appliance.

The technical purpose indicated and the aims specified are substantially achieved by a method for controlling a household electrical appliance and a system comprising a household electrical appliance and the related interaction means having the technical features described in one or more of the appended claims.

### Brief Description of the Drawings

Further features and advantages of the invention are more apparent in the non-limiting description which follows of a preferred non-limiting embodiment of a method for controlling a household electrical appliance and a system comprising a household electrical appliance and the related interaction means, as illustrated in the accompanying drawings, in which:

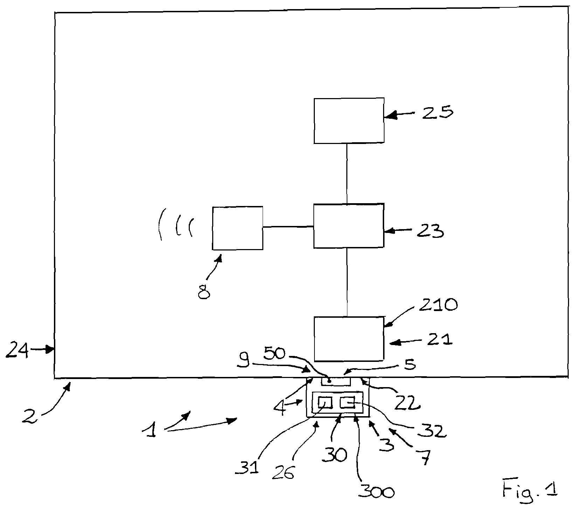

- Figure 1 is a block diagram illustrating a system according to this invention;

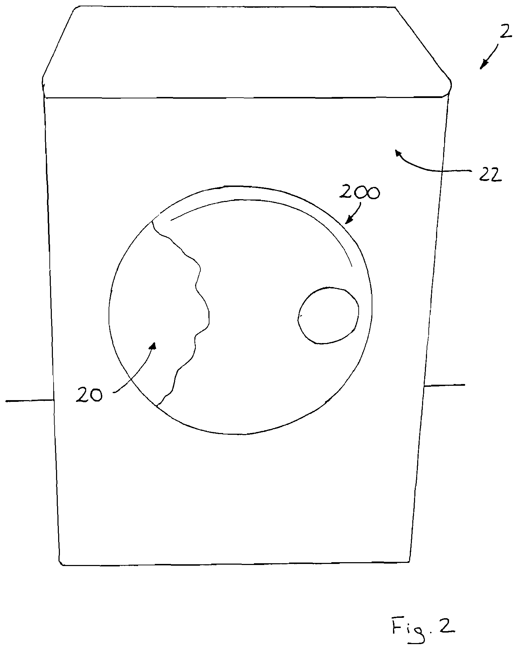

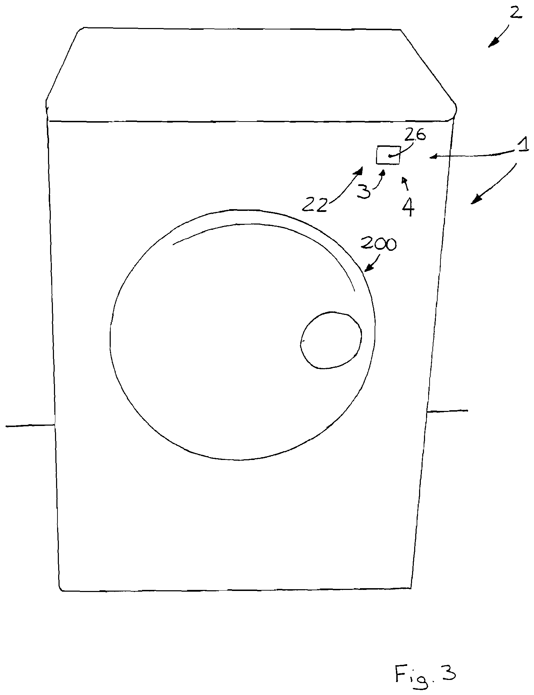

- Figures 2 and 3 show the same household electrical appliance in two different situations;
- Figures 4 to 7 show some examples of a component of the system.

### Detailed Description of the Preferred Embodiments of the Invention

The subject-matter of this invention is a system 1 comprising:
i) a household electrical appliance 2;
ii) means 7 for interacting with the household electrical appliance 2.

The interaction means 7 comprise at least one body 3 in turn comprising an electronic device 30 comprising a memory 31 and an antenna 32 operatively connected to each other. The memory 31 contains at least one item of information that can be transmitted to the household electrical appliance 2. Advantageously, said item of information is a command, a parameter or an identifier. The body 3 is easy to handle and transport. Conveniently, its size is such that it can be entirely contained in an imaginary cube whose edges are 5 centimetres long.

The household electrical appliance 2 in turn comprises:
- radio frequency communication means 21 designed to interact with the antenna 32 of the electronic device 30;
- an application surface 22 which the at least one body 3 can be applied to;
- an electronic control system 23 for controlling at least one function of the household electrical appliance 2.

The electronic control system 23 is operatively connected to the communication means 21. The control system 23 comprises, for example, an electronic card for controlling the household electrical appliance 2. More specifically, the control system 23 of the household electrical appliance 2 may control functional means 25 of the household electrical appliance 2 (for example, in the case of a washing machine, the functional means 25 comprise washing means such as the rotary drum, the water and detergent supply system, etc.).

Advantageously, the electronic device 30 comprises, and/or coincides with, an RFID tag 300 that integrates the memory 31 and the antenna 32. Conveniently, the radio frequency communication means 21 comprise an RFID reader 210. What is described below with reference to the electronic control device 30 might also apply to the RFID tag 300. Similarly, what is described below with reference to the radio frequency communication means 21 might also apply to the RFID reader 210.

The body 3 can be releasably connected to the application surface 22. By placing at least one body 3 in contact with the application surface 22, the communication means 21 can interact with the antenna 32 in order to transfer to the control system 23 at least one item of information present in the memory 31. That way, the at least one item of information is transferred from the memory 31 to the control system 23 through the communication means 21 and the antenna 32.

Conveniently, the at least one item of information is transferred using the very well known RFID technology, an acronym for the English term Radio Frequency IDentification.

Typically the memory 31 is a microchip. Conveniently, the memory 31 is of the non-volatile type. The memory 31 may or may not be of the read/write type. Advantageously, the microchip is applied to a flexible polyester film to reduce size and cost. Usually, the body 3 does not comprise means for powering the electronic device 30. The latter is activated upon receiving a signal emitted by the communication means 21 and is therefore able to transmit the content of the memory 32 to the RFID reader 210. In the absence of means for powering the body 3, the electronic device 30 gets its supply voltage by drawing power from the electromagnetic field generated by the communication means 21 (typically the RFID tag 300 gets its supply voltage by drawing power from the electromagnetic field generated by the RFID reader 210) .

In an alternative embodiment, the body 3 comprises power supply means, such as a battery for example, which powers the electronic device 30 and, if necessary, other electronic components in the body 3.

The household electrical appliance 2 may be of various types. For example, it may belong to the category of white household appliances. In that case, the household electrical appliance 2 may be a washing and/or drying appliance (for dishes or laundry, such as a dishwasher, a washing machine, a washer/drier or a drying machine) or an appliance for cooling and storing food (for example, a refrigerator, a refrigerator/freezer, etc.) or a cooking appliance for example, an oven). Alternatively, the household electrical appliance 2 might belong to the category of brown household appliances.

In that case, it might be, for example: an audio-visual appliance (for example a television set) or an audio appliance (for example a stereo).

If the household electrical appliance 2 is an audio-visual appliance, the electronic device 30 forming part of the body 3 might transfer to the communication means 21 (and hence to the control system 23) information such as prememorized pieces of music or film clips.

If the household electrical appliance 2 is an appliance for cooling and storing food products, the electronic device 30 forming part of the body 3 might contain information regarding the food products stored in the household electrical appliance 2. This implies that a user who buys a food product receives a respective body 3 comprising the electronic device 30 with information about the product purchased (for example, the best before date) . When the product is placed in the cooling and storing appliance, the user can apply the respective body 3 to the application surface 22. That way, the electronic device 30 of the body 3 transfers to the communication means 21 (and hence to the control system 23) at least one item of information regarding the food product. The cooling and storing appliance may then report certain information to the user. For example, it might alert the user that the best before date of the product is approaching.

Alternatively, as explained in more detail below, the electronic device 30 might be programmed directly by the user with a certain piece of information (in the above example, the user might himself enter the best before date in the electronic device 30) .

If the household electrical appliance 2 is a product washing or cooking appliance, the electronic device 30 forming part of the body 3 might transfer to the communication means 21 (and hence to the control system 23) at least one item of information corresponding to at least one command to perform a product treatment (washing or cooking). More specifically, said item of information might correspond to at least one command and at least one of the variables necessary for defining a washing cycle (temperature, spin-drying speed, type of detergent, use of additives if necessary, type of fabric to be washed, and so on) or a cooking cycle (type of food, cooking time, temperature, and so on). Advantageously, said item of information might correspond to a command relating to a treatment and to all the variables necessary to define the treatment itself.

If the household electrical appliance 2 is a washing or cooking appliance, it comprises a treatment compartment 20 equipped with a door 200.

Placing the body 3 in contact with the application surface 22, combined with closure of the door 200 starts the treatment cycle provided in the electronic device 30 (that is to say, preset in the corresponding memory 31) forming part of the at least one body 3 placed in contact with the application surface 22. Obviously, the products to be treated must be placed in the treatment compartment 20 beforehand.

Removing the at least one body 3 from the application surface 22 of the household electrical appliance 2 tells the control system 23 to interrupt (for example, placing it on standby, ready for another command to be entered) a function activated by the at least one command corresponding to the item of information transferred to the communication means 21 (and hence to the control system 23) by the electronic device 30 forming part of the body 3 previously placed in contact with the application surface 22 of the household electrical appliance 2.

The removal of the body 3 is detected by the household electrical appliance 2 because, during operation, the communication means 21 periodically check for the presence of the body 3.

The above examples are non-limiting and illustrate only some of the possible applications.

Generally speaking, the household electrical appliance 2 comprises an outer enclosure 24. Typically, the enclosure 24 protects the functional components of the household electrical appliance 2 and, in particular, the electronic circuitry inside the household electrical appliance 2, and also constitutes an aesthetic cover. Advantageously, the outer enclosure 24 comprises the application surface 22. In particular, the application surface 22 is directly accessible by the user from the outside of the enclosure 24 (without having to perform intermediate steps).

Advantageously, the enclosure 24 is substantially in the shape of a parallelepiped with 6 faces. In that case, the application surface 22 may coincide with one of the faces of the household electrical appliance 2. In one particular embodiment, the application surface 22 is delimited by a graphic sign indicating to the user where to apply the body 3 in order to interact with the household electrical appliance 2.

The combination of the at least one body 3 and the application surface 22 forms a user interface 4 for controlling the household electrical appliance 2.

In one particular, non-limiting embodiment, the combination of the at least one body 3 and the application surface 22 forms the only user interface 4 (preferably of electronic type) visible from the outside of the household electrical appliance 2 and allowing input for the electronic control system 23 to be provided. This makes it possible to avoid having unattractive pushbuttons and selectors on the visible surface of the enclosure 24. This makes it possible to obtain a very special aesthetic effect.

In another non-limiting embodiment, the combination of the at least one body 3 and the application surface 22 forms the only user interface 4 visible from the outside of the household electrical appliance 2. In this case, for example, there are not even any additional display units or display means outside the interface 4. In that case, a special type of body 3 with a display area might be used (as described in more detail below).

In another non-limiting embodiment, the combination of the at least one body 3 and the application surface 22 forms the only user interface 4 of the household electrical appliance 2 that does not entail direct contact between the user and the household electrical appliance 2 (in effect, there might be mechanical pushbuttons or touch screens that control some of the basic functions of the household electrical appliance 2, such as switching on and off).

The system 1 advantageously comprises releasable connection means 9 between the body 3 and the application surface 22.

The releasable connection means 9 are at least partly built into the at least one body 3 and/or in the application surface 22.

The releasable connection means 9 may be of the magnetic type.

For example, the body 3 may comprise a magnet 50 and the application surface 22 may be made of ferromagnetic material - for example, metal (which can interact with the magnet 50 in order to releasably connect the body 3 to the application surface 22). In an alternative embodiment, the releasable connection means 9 may comprise a suction cup. Advantageously, said suction cup is integral with the body 3 and allows it to be releasably connected to the application surface 22. In another embodiment, the releasable connection means 9 comprise a Velcro fastener.

In another embodiment, the application surface 22 is substantially horizontal and the body 3 may simply be rested on it.

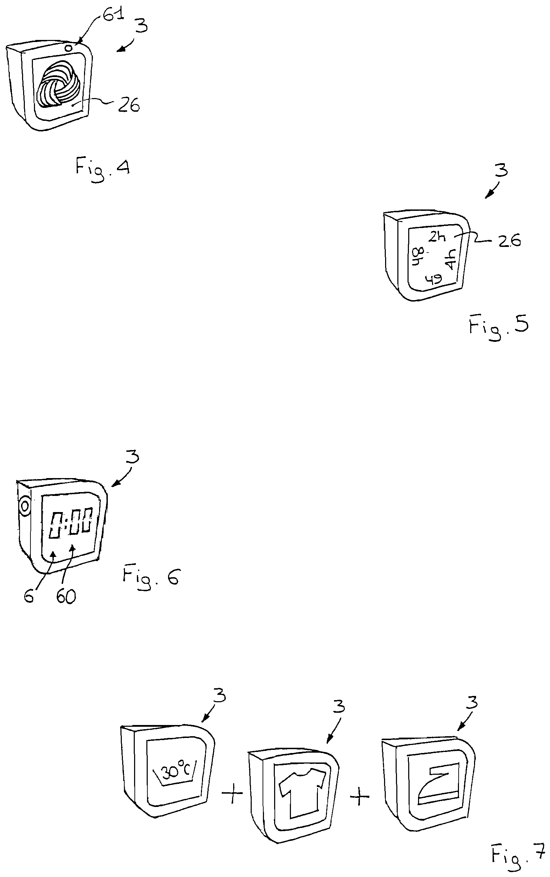

Advantageously, the electronic device 30 can transmit to the household electrical appliance 2 different items of information according to how it is spatially oriented when it is in contact with the application surface 22. In this regard, the body 3 comprises means for determining the orientation of the body 3 in space (for example, these determining means might comprise a ball that moves by gravity in a container; the ball, depending on its position relative to the container, might allow different pairs of conductors to be placed in electrical communication; each pair of conductors placed in electrical communication is associated with a different item of information, for example a different command, transferred to the household electrical appliance). Figure 5 illustrates by way of an example a body 3 which can advantageously be used in washing appliances to delay the start of the washing cycle. Depending on the side of the body 3 that is applied to a predetermined reference (which may also be imaginary), washing may be delayed by a distinct time interval (in the example of Figure 5, the time interval may, in turns, be 2, 4, 6 or 8 hours). In an alternative embodiment, the orientation of the body 3 relative to the application surface 22, might be associated with a different temperature at which products are treated by the household electrical appliance 2 (for example, a cooking or washing appliance).

Alternatively, the body 3 might also have more than one application surface, with a predetermined item of information unambiguously associated with each application surface. The user might then select each of the predetermined items of information by just choosing the application surface of the body 3 to be placed in contact with the application surface 22 of the household electrical appliance 2.

Advantageously, the body 3 comprises means for writing the memory 31 of the electronic device 30 according to the signal from the communication means 21.

Advantageously, the body 3 comprises signalling means 6 which are operatively connected to the electronic device 30 and which output information from the communication means 21. The signalling means 6 may comprise a display unit 60. The display unit 60 might comprise a display area to indicate predetermined information to the user regarding the operating state of the household electrical appliance 2, such as, for example, the time remaining to the end of a cooking or washing cycle which is in progress (for example, see Figure 6).

Alternatively, the display unit 60 might comprise at least one warning light 61 (see Figure 4) indicating that a command associated with the item of information present in the memory of the body 3 is being carried out. The user thus has visual confirmation (feedback) of the execution of a specific command given. This function might be useful, for example, in a case where the user has positioned on the application surface 22 two bodies 3 comprising respective electronic devices 30 which transmit contrasting items of information to the household electrical appliance 2 (for example, washing at 30° and washing at 60°). The warning light 61 unambiguously tells the user which items of information are actually being used by the control system 23 of the household electrical appliance 2 (in particular, the items of information are those associated with the body 3 having a warning light 61 that is switched on). Advantageously, the warning light 61 may adopt different operating conditions, each corresponding to a different operating state of the household electrical appliance 2 (for example: treatment in progress, pause, end of treatment, etc.). Each different operating condition of the warning light 61 may be associated with a different colour and/or flashing.

Alternatively, the signalling means 6 might be integrated in the household electrical appliance 2 instead of in the body 3. The signalling means 6 might comprise an acoustic emitter which outputs information from the household electrical appliance 2. For example, the acoustic emitter might generate a certain tone when the body 3 is placed in contact with the application surface 22, to indicate that the communication means 21 have acknowledged that the body 3 has been correctly positioned. The acoustic emitter might generate a plurality of predetermined tones, each associated with a corresponding feedback signal addressed to the user.

In one embodiment, the household electrical appliance 2 comprises wireless signal transmission means 8 designed to communicate with a remote device such as, for example, a telephone device outside the household electrical appliance 2. Preferably, the wireless transmission means 8 can communicate with the external telephone device through the GSM standard or the bluetooth standard. That way, they can send a message to a predetermined telephone number to report information regarding the operation of the household electrical appliance 2 (this embodiment is particularly useful if the household electrical appliance 2 does not have any kind of display device for communicating with the outside). The above mentioned wireless transmission means 8 are therefore operatively connectable to the control system 23.

The at least one body 3 can be applied to the application surface 22 in relief. This makes it easier for a user to see at a glance if and which body 3 has been placed on the application surface 22.

More specifically, the application surface 22 is a uniform surface, without recesses, pushbuttons or knobs on it.

The body 3 has an outer shape or graphic sign reminiscent of the information that is prememorized in the electronic device 30 (in particular in the memory 31). For example, Figure 4 illustrates a body 3 comprising an electronic device 30 which controls a specific washing cycle for woollens. More specifically, the body 3 has the shape of a block having a first surface intended to face the application surface 22 and a second surface 26 opposite the first surface. Advantageously, the graphic sign reminiscent of the information that is prememorized in the memory 31 is visible on the second surface 26. The graphic sign might be a photograph. Advantageously, the photograph is applied to the second surface 26 by adhesion. Thus, the body 3 might be customized to suit specific user requirements (for example, a programme for washing babies' clothes might be associated with a body 3 bearing the photo of a baby known to the user).

The item of information, or more specifically, the command, integrated in the memory 31 of the electronic device 30 might also be customized according to specific user requirements. Thus, an electronic device 30 for a washing appliance might contain a memory 31 with information to run a particularly vigorous washing programme especially designed for certain categories of users (for example, people who practice sports such as football, cross-country motorcycling, and so on). In this case, too, the command is advantageously preset in the memory 31. Advantageously, an order for an electronic device 30 to meet specific requirements might be submitted online. In one particular embodiment, the body 3 might comprise a communications port to communicate with a computer (for example, a USB port) and to allow the electronic device 30 to be programmed directly by the user (who might download the programming code directly online). In the latter case, the body 3 might be marketed in the blank state.

Advantageously, the system 1 comprises a plurality of bodies 3, each comprising an electronic device 30 in turn comprising a memory 31 and an antenna 32, and having at least one item of information in the memory 31.

The communication means 21 are designed to interact with the electronic devices 30 of the plurality of bodies 3. More specifically, the communication means 21 and the antenna 32 of the electronic device 30 can create a connection between the control means 23 of the household electrical appliance 2 and the memory 31 of the electronic device 3.

Advantageously, the electronic devices 30 of the plurality of bodies 3 are designed to interact with a single RFID reader 21 of the household electrical appliance 2.

Advantageously, the plurality of bodies 3 comprises at least one first body 3 comprising a first electronic device 30 and a second body 3 comprising a second electronic device 30. The memory 31 of the first electronic device 30 contains the item of information to be transferred to the household electrical appliance 2 to ignore the placing on the application surface 22, or the removal from the application surface 22, of any bodies 3 comprising other electronic devices 30 until the second body 3 comprising the second electronic device 30 has been placed on the application surface 22. This constitutes a safety system preventing children from imparting unwanted commands to the household electrical appliance 2.

The placing on the application surface 22 of a combination of a plurality of bodies 3, each comprising a corresponding electronic device 30, can be associated with the performance of a treatment of washing or cooking a product by the household electrical appliance 2. In that case, each of the single electronic devices 30 of the combination corresponds to one or more items of information combined to define and activate said treatment.

Figure 7, for example, illustrates three bodies 3 which can be combined to define a particular washing cycle: in the example of Figure 7, the three bodies 3, if applied in combination to the application surface 22 of a washing appliance, can implement a fabric washing cycle (second body 3 from the left) at 30°C (first body 3 on the left) with the "easy iron" option activated (first body 3 on the right).

The item of information stored in the memory 31 of another electronic device 30 (other than those used in the above mentioned combination) can, on the other hand, be associated with the performance of a complete treatment of washing or cooking a product by the household electrical appliance 2.

Conveniently, the system 1 comprises a panel for placing the bodies 3 when they are not in use (that is, when they are not in contact with the application surface 22). For example, the panel allows removable connection with the body 3. In an embodiment where the body 3 has a magnet 50, for example, the panel might be made from metallic material. The panel might be a blackboard designed to be placed at the household electrical appliance 2.

This invention also provides a method for controlling a household electrical appliance 2 comprising radiofrequency communication means 21 and an electronic control system 23 for controlling at least one function of the household electrical appliance 2. The radiofrequency communication means 21 and the electronic control system 23 are operatively connected to each other. Advantageously, the household electrical appliance 2 comprises one or more of the technical features described above with reference to the system 1.

The method comprises the step of removably placing at least one body 3 in contact with an application surface 22 made on the household electrical appliance 2. The body 3 comprises an electronic device 30 in turn comprising a memory 31 and an antenna 32, and having in the memory 31 at least one predetermined item of information (in particular a predetermined command). The body 3 and the electronic device 30 have one or more of the features described above with reference to the system 1.

At least when the at least one body 3 is in contact with the application surface 22, the corresponding electronic device 30 can interact through the antenna 32 with the communication means 21 to transfer to the control system 23 the at least one item of information (for example associated with a predetermined command) present in the memory 31.

In certain cases, the household electrical appliance 2 comprises a treatment compartment 20 equipped with a door 200 (this being advantageously the case when the household electrical appliance 2 is a washing machine, a dishwasher, an oven, etc.)..

In these circumstances, the method comprises the steps of:
- placing the products to be treated in the treatment compartment 20;
- closing the door 200.

The step of placing the body 3 in contact with the application surface 22 combined with the step of closing the door 200 determines the start of the treatment cycle associated with the item of information present in the memory 31 of the electronic device 30 forming part of the at least one body 3 placed in contact with the application surface 22.

The method may also comprise the step of removing the at least one body 3 from the application surface 22 of the household electrical appliance 2. Doing so tells the control system 23 to interrupt a function (for example a washing programme) activated by the at least one item of information transferred to the communication means 21 (and hence to the control system 23) by the electronic device 30 forming part of the body 3 previously placed in contact with the application surface 22 of the household electrical appliance 2.

Removing the body 3 and moving it away advantageously puts the household electrical appliance 2 in a standby state. When the same body 3 is placed in contact with the application surface 22 again, the household electrical appliance 2 resumes the programme from the situation where it was interrupted. For resetting the programme, on the other hand, the method comprises the step of rapidly oscillating the body 3. For this purpose, the body 3 contains a component which is sensitive to oscillations, and which, when activated, interacts with the electronic device 30.

This invention has important advantages. First of all, it provides a novel, easy and intuitive way for the user to interact with the household electrical appliance 2.

Another important advantage is that the user may purchase the household electrical appliance 2 and only the bodies 3 associated with the electronic devices 30 that permit only the commands of actual interest to be carried out (for example, in the case of traditional washing machines, the number of programmes that is actually used by the user is limited compared to the full range of programmes that can be selected with the user interface).

Moreover, the user can update his household electrical appliance 2 by simply purchasing a new body 3 having an electronic device 30 containing instructions for a new programme. In the case of a washing machine, this might be the result of a need to bring the appliance into line with a user's change of lifestyle (following a wedding, birth of a child, and so on).

A body 3 comprising an electronic device 30 associated with a specific function of the household electrical appliance 2 might also constitute an original and pleasing gift.

For example, a certain article might be sold in combination with a body 3 comprising an electronic device 30 specific for applying a treatment on the article purchased (for example, an electronic device 30 with a prememorized cooking cycle might be purchased in combination with a certain food product, or an electronic device 30 with a prememorized washing cycle might be purchased in combination with a certain garment).

A further advantage is that the body 3 comprising the electronic device 30 might be used in turns on two or more identical household electrical appliances 2. Thus, for example, a user used to a particular washing cycle might take the body 3 containing the electronic device 30 for that washing cycle on holiday with him so that it can be implemented on a household electrical appliance 2 installed in the holiday home.

It shall be understood that the invention described above may be modified and adapted in several ways without departing from the scope of the inventive concept. Moreover, all the details of the invention may be substituted by other technically equivalent elements. In practice, all the materials used, as well as the dimensions, may vary according to requirements.

## Claims

1. A system comprising:
i) a household electrical appliance (2);
ii) means (7) for interacting with the household electrical appliance (2);
wherein the interaction means (7) comprise at least one body (3) in turn comprising an electronic device (30) comprising a memory (31) and an antenna (32) operatively connected to each other, the memory (31) having at least one item of information to be transmitted to the household electrical appliance (2), said item of information being a command, a parameter or an identifier; said household electrical appliance (2) in turn comprising:
- radio frequency communication means (21) designed to interact with the antenna (32) of the electronic device (30);
- an application surface (22) which the at least one body (3) can be applied to;
- an electronic control system (23) for controlling at least one function of the household electrical appliance (2), said electronic control system (23) being operatively connected to the communication means (21);
the communication means (21) being able, by placing the body (3) in contact with the application surface (22), to interact with the antenna (32) in order to transfer to the control system (23) the at least one item of information present in the memory (31);
wherein the body (3) comprising the electronic device (30) is releasably connectable to the application surface (22) by releasable connection means (9), the releasable connection means (9) between the body (3) and the application surface (22) being in particular at least partly built into the at least one body (3) and/or in the application surface (22);
the combination of the at least one body (3) and the application surface (22) forms a user interface (4) for controlling the household electrical appliance (2),
**characterized in that** the electronic device (30) comprises, and/or coincides with, an RFID tag (300) that integrates the memory (31) and the antenna (32), the radio frequency corrununication means (21) comprising an RFID reader (210).

2. The system according to claim 1, **characterized in that** the electronic device (30) can transmit to the household electrical appliance (2) different items of information according to how it is spatially oriented when it is in contact with the application surface (22).

3. The system according to claim 1 or 2, **characterized in that** the releasable connection means (9) are of the magnetic type.

4. The system according to any of the foregoing claims, **characterized in that** the household electrical appliance (2) comprises an outer enclosure (24) which comprises the application surface (22).

5. The system according to any of the foregoing
claims, **characterized in that** said combination of the at least one body
(3) and the application surface (22) forming the only user interface (4) visible from the outside of the household electrical appliance (2) and allowing the electronic control system (23) to be provided with input.

6. The system according to any of the foregoing claims, **characterized in that** the body (3) comprises signalling means (6) which are operatively connected to the electronic device (30) and which output information from the corrununication means (21), the signalling means (6) comprising in particular a display unit (60),

7. The system according to any of the foregoing claims, **characterized in that** the at least one body (3) is applied in relief to the application surface (22) .

8. The system according to any of the foregoing claims, **characterized in that** the at least one body (3) is shaped to, or bears a graphic symbol such as to, be reminiscent of the at least one item of information present in the memory (31) of the electronic device (30).

9. The system according to any of the foregoing claims, **characterized in that** it comprises a plurality of bodies (3), each comprising an electronic device (30) in turn comprising an antenna (32) and a memory (31) containing at least one item of information.

10. The system according to any of the foregoing claims, **characterized in that** the information stored in the memory (31) of the electronic device (30) is associated with the performance of a full cooking or washing treatment on a product by the household electrical appliance (2).

11. A method for controlling a household electrical appliance comprising radio frequency corrununication means (21) and an electronic control system (23) for controlling at least one function of the household electrical appliance (2)' the corrununication means (21) and the control system (23) being operatively connected to each other;
**characterised in that** the method comprising the step of releasably placing at least one body (3) in contact with an application surface (22) made on the household electrical appliance (2), the body (3) comprising at least one electronic device (30) in turn comprising a memory (31) and an antenna (32), the electronic device (30) comprising, and/or coinciding with, an RFID tag (300) that integrates the memory (31) and the antenna (32) and the radio frequency corrununication means (21) comprising an RFID reader (210), and having in the memory (31) at least one predetermined item of information, at least when the at least one body (3) is in contact with the application surface (22) the corresponding electronic device (30) being able to interact with the communication means (21) through the antenna (32) to transfer to the control system (23) the at least one item of information present in the memory (31), the at least one body (3) and the application surface (22) in combination forming a user interface (4) for controlling the household electrical appliance (2).

12. The method according to claim 11, **characterized in that** the household electrical appliance (2) comprises a product treatment compartment (20) equipped with a door (200), the method comprising the steps of:
- placing products to be treated in the treatment compartment (20);
- closing the door (200);
the step of placing the body (3) in contact with the application surface (22) combined with the step of closing the door (200) determining the start of the treatment cycle associated with the item of information present in the memory (31) of the electronic device (30) forming part of the at least one body (3) placed in contact with the application surface (22).

13. The method according to claim 11 or 12, **characterized in that** it comprises the step of removing the at least one body (3) from the application surface (22) of the household electrical appliance
(2) in order to tell the control system (23) to interrupt a function activated by the at least one information item transferred to the communication means (21) by the electronic device (30) forming part of the body (3) that has previously been placed in contact with the application surface (22) of the household electrical appliance (2).

14. The method according to claim 11 or 12 or 13, **characterized by** releasably connecting the body (3) and the application surface (22) by means of releasable connection means (9) at least partly built into the at least one body (3) and/or in the application surface (22).

## Patentansprüche

1. System, umfassend:
i) ein elektrisches Haushaltsgerät (2);
ii) Wechselwirkungsmittel (7) zum Wechselwirken mit dem elektrischen Haushaltsgerät (2);
wobei die Wechselwirkungsmittel (7) wenigstens einen Körper (3) umfassen, welcher wiederum eine elektronische Vorrichtung (30) umfasst, welche einen Speicher (31) und eine Antenne (32) umfasst, welche betriebsmäßig miteinander verbunden sind, wobei der Speicher (31) wenigstens ein an das elektrische Haushaltsgerät (2) zu übertragendes Informationselement aufweist, wobei das Informationselement ein Befehl, ein Parameter oder eine Kennung ist; wobei das elektrische Haushaltsgerät (2) wiederum umfasst:
- Radiofrequenz-Kommunikationsmittel (21), welche dazu eingerichtet sind, mit der Antenne (32) der elektronischen Vorrichtung (30) zu wechselwirken;
- eine Anwendungsfläche (22), auf welche der wenigstens eine Körper (3) angewendet werden kann;
- ein elektronisches Regelungs-/Steuerungssystem (23) zum Regeln/Steuern wenigstens einer Funktion des elektrischen Haushaltsgeräts (2), wobei das elektronische Regelungs-/Steuerungssystem (23) betriebsmäßig mit den Kommunikationsmitteln (21) verbunden ist;
wobei die Kommunikationsmittel (21) in der Lage sind, indem der Körper (3) in Kontakt mit der Anwendungsfläche (22) versetzt wird, mit der Antenne (32) zu wechselwirken, um das wenigstens eine in dem Speicher (31) vorhandene Informationselement an das Regelungs-/Steuerungssystem (23) zu übertragen; wobei der Körper (3), welcher die elektronische Vorrichtung (30) umfasst, mit der Anwendungsfläche (22) durch Lösbare-Verbindung-Mittel (9) lösbar verbindbar ist, wobei die Lösbare-Verbindung-Mittel (9) zwischen dem Körper (3) und der Anwendungsfläche (22) insbesondere wenigstens teilweise in dem wenigstens einen Körper (3) oder/und in der Anwendungsfläche (22) eingebaut sind;
wobei die Kombination aus dem wenigstens einen Körper (3) und der Anwendungsfläche (22) eine Benutzerschnittstelle (4) zum Regeln/Steuern des elektrischen Haushaltsgeräts (2) bildet,
**dadurch gekennzeichnet, dass** die elektronische Vorrichtung (30) eine RFID-Marke (300) umfasst oder/und mit ihr zusammenfällt, welche den Speicher (31) und die Antenne (32) integriert, wobei die Radiofrequenz-Kommunikationsmittel (21) einen RFID-Leser (210) umfassen.

2. System nach Anspruch 1, **dadurch gekennzeichnet, dass** die elektronische Vorrichtung (30), entsprechend der räumlichen Orientierung, unterschiedliche Informationselemente an das elektrische Haushaltsgerät (2) übertragen kann, wenn sie in Kontakt mit der Anwendungsfläche (22) steht.

3. System nach Anspruch 1 oder 2, **dadurch gekennzeichnet, dass** die Lösbare-Verbindung-Mittel (9) vom magnetischen Typ sind.

4. System nach einem der vorstehenden Ansprüche, **dadurch gekennzeichnet, dass** das elektrische Haushaltsgerät (2) ein Außengehäuse (24) umfasst, welches die Anwendungsfläche (22) umfasst.

5. System nach einem der vorstehenden Ansprüche, **dadurch gekennzeichnet, dass** die Kombination aus dem wenigstens einen Körper (3) und der Anwendungsfläche (22) die einzige Benutzerschnittstelle (4) bildet, welche von außerhalb des elektrischen Haushaltsgeräts (2) sichtbar ist und welche dem elektronischen Regelungs-/Steuerungssystem (23) gestattet, mit einer Eingabe bereitgestellt zu werden.

6. System nach einem der vorstehenden Ansprüche, **dadurch gekennzeichnet, dass** der Körper (3) Signalisierungsmittel (6) umfasst, welche betriebsmäßig mit der elektronischen Vorrichtung (30) verbunden sind und welche Informationen von den Kommunikationsmitteln (21) ausgeben, wobei die Signalisierungsmittel (6) insbesondere eine Anzeigeeinheit (60) umfassen.

7. System nach einem der vorstehenden Ansprüche, **dadurch gekennzeichnet, dass** der wenigstens eine Körper (3) im Relief an der Anwendungsfläche (22) angebracht ist.

8. System nach einem der vorstehenden Ansprüche, **dadurch gekennzeichnet, dass** der wenigstens eine Körper (3) die Form eines graphischen Symbols aufweist oder ein graphisches Symbol aufweist, um an das in dem Speicher (31) der elektronischen Vorrichtung (30) vorhandene Informationselement zu erinnern.

9. System nach einem der vorstehenden Ansprüche, **dadurch gekennzeichnet, dass** es eine Mehrzahl von Körpern (3) umfasst, welche jeweils eine elektronische Vorrichtung (30) umfassen, welche wiederum eine Antenne (32) und einen wenigstens ein Informationselement enthaltenden Speicher (31) umfasst.

10. System nach einem der vorstehenden Ansprüche, **dadurch gekennzeichnet, dass** die im Speicher (31) der elektronischen Vorrichtung (30) gespeicherte Information dem Durchführen einer vollen Koch- oder Waschbehandlung eines Produkts durch das elektrische Haushaltsgerät (2) zugeordnet ist.

11. Verfahren zum Regeln/Steuern eines elektrischen Haushaltsgeräts, das Radiofrequenz-Kommunikationsmittel (21) und ein elektronisches Regelungs-/Steuerungssystem (23) zum Regeln/Steuern wenigstens einer Funktion des elektrischen Haushaltsgeräts (2) umfasst, wobei die Kommunikationsmittel (21) und das Regelungs-/Steuerungssystem (23) betriebsmäßig miteinander verbunden sind;
**dadurch gekennzeichnet, dass** das Verfahren den Schritt eines lösbaren in Kontakt Versetzens wenigstens eines Körpers (3) mit einer auf dem elektrischen Haushaltsgerät (2) hergestellten Anwendungsfläche (22) umfasst, wobei der Körper (3) wenigstens eine elektronische Vorrichtung (30) umfasst, welche wiederum einen Speicher (31) und eine Antenne (32) umfasst, wobei die elektronische Vorrichtung (30) eine RFID-Marke (300) umfasst oder/und mit ihr zusammenfällt, welche den Speicher (31) und die Antenne (32) integriert, und die Radiofrequenz-Kommunikationsmittel (21) einen RFID-Leser (210) umfassen, und in dem Speicher (31) wenigstens ein vorbestimmtes Informationselement aufweist, wobei wenigstens wenn der wenigstens eine Körper (3) in Kontakt mit der Anwendungsfläche (22) steht, die entsprechende elektronische Vorrichtung (30) in der Lage ist, mit den Kommunikationsmitteln (21) durch die Antenne (32) zu wechselwirken, um das wenigstens eine in dem Speicher (31) vorhandene Informationselement an das Regelungs-/Steuerungssystem (23) zu übertragen, wobei der wenigstens eine Körper (3) und die Anwendungsfläche (22) in Kombination eine Benutzerschnittstelle (4) zum Steuern/Regeln des elektrischen Haushaltsgeräts (2) bilden.

12. Verfahren nach Anspruch 11, **dadurch gekennzeichnet, dass** das elektrische Haushaltsgerät (2) ein mit einer Tür (200) ausgestattetes Produktbehandlungsabteil (20) umfasst, das Verfahren umfassend die Schritte:
- Platzieren von zu behandelnden Produkten in dem Behandlungsabteil (20);
- Schließen der Tür (200);
wobei der Schritt des in Kontakt Versetzens des Körpers (3) mit der Anwendungsfläche (22) kombiniert mit dem Schritt des Schließens der Tür (200) den Start eines dem in dem Speicher (31) der elektronischen Vorrichtung (30), welche einen Teil des wenigstens einen Körpers (3) bildet, welcher in Kontakt mit der Anwendungsfläche (22) versetzt ist, vorhandenen Informationselement zugeordneten Behandlungszyklus bestimmt.

13. Verfahren nach Anspruch 11 oder 12, **dadurch gekennzeichnet, dass** es den Schritt eines Entfernens des wenigstens einen Körpers (3) von der Anwendungsfläche (22) des elektrischen Haushaltsgeräts (2) umfasst, um dem Regelungs-/Steuerungssystem (23) mitzuteilen, eine durch das wenigstens eine Informationselement aktivierte Funktion zu unterbrechen, welches an die Kommunikationsmittel (21) durch die elektronische Vorrichtung (30) übertragen wurde, welche einen Teil des Körpers (3) bildet, welcher vorher mit der Anwendungsfläche (22) des elektrischen Haushaltsgeräts (2) in Kontakt versetzt worden ist.

14. Verfahren nach Anspruch 11 oder 12 oder 13, **gekennzeichnet durch** lösbares Verbinden des Körpers (3) und der Anwendungsfläche (22) mittels Lösbare-Verbindung-Mittel (9), welche wenigstens teilweise in dem wenigstens einen Körper (3) oder/und in der Anwendungsfläche (22) eingebaut sind.

## Revendications

1. Système comprenant :
i) un appareil électroménager (2) ;
ii) des moyens d'interaction (7) avec l'appareil électroménager (2) ;
dans lequel les moyens d'interaction (7) comprennent au moins un bloc (3) comprenant à son tour un dispositif électronique (30) comprenant une mémoire (31) et une antenne (32) reliées fonctionnellement l'une à l'autre, la mémoire (31) ayant au moins un élément d'information à transmettre à l'appareil électroménager (2), ledit élément d'information étant une commande, un paramètre ou un identifiant : ledit appareil électroménager (2) comprenant à son tour :
- des moyens de communication à fréquence radioélectrique (21) conçus pour interagir avec l'antenne (32) du dispositif électronique (30) ;
- une surface de montage (22) sur laquelle l'au moins un bloc (3) peut être monté ;
- un système de commande électronique (23) pour commander au moins une fonction de l'appareil électroménager (2), ledit système de commande électronique (23) étant relié fonctionnellement aux moyens de communication (21) ;
les moyens de communication (21) pouvant, en plaçant le bloc (3) en contact avec la surface de montage (22), interagir avec l'antenne (32) afin de transférer au système de commande (23) l'au moins un élément d'information présent dans la mémoire (31) ; dans lequel le bloc (3) comprenant le dispositif électronique (30) est relié de façon libérable à la surface de montage (22) par des moyens de liaison libérables (9), les moyens de liaison libérables (9) entre le bloc (3) et la surface de montage (22) étant en particulier au moins partiellement réalisés dans l'au moins un bloc (3) et/ou dans la surface de montage (22) ;
la combinaison de l'au moins un bloc (3) et de la surface de montage (22) constitue une interface utilisateur (4) pour commander l'appareil électroménager (2),
**caractérisé en ce que** le dispositif électronique (30) comprend, et/ou coïncide avec, une étiquette RFID (300) qui intègre la mémoire (31) et l'antenne (32), les moyens de communication à fréquence radioélectrique (21) comprenant un lecteur RFID (210).

2. Système selon la revendication 1, **caractérisé en ce que** le dispositif électronique (30) peut transmettre à l'appareil électroménager (2) différents éléments d'information selon la manière dont il est orienté spatialement lorsqu'il se trouve en contact avec la surface de montage (22).

3. Système selon la revendication 1 ou 2, **caractérisé en ce que** les moyens de liaison libérables (9) sont du type magnétique.

4. Système selon l'une quelconque des revendications précédentes, **caractérisé en ce que** l'appareil électroménager (2) comprend une enceinte extérieure (24) qui comprend la surface de montage (22).

5. Système selon l'une quelconque des revendications précédentes, **caractérisé en ce que** ladite combinaison de l'au moins un bloc (3) et de la surface de montage (22) constituant la seule interface utilisateur (4) visible de l'extérieur de l'appareil électroménager (2) et permettant de fournir une entrée au système de commande électronique (23).

6. Système selon l'une quelconque des revendications précédentes, **caractérisé en ce que** le bloc (3) comprend des moyens de signalisation (6) qui sont reliés fonctionnellement au dispositif électronique (30) et qui délivrent de l'information à partir des moyens de communication (21), les moyens de signalisation (6) comprenant en particulier une unité d'affichage (60).

7. Système selon l'une quelconque des revendications précédentes, **caractérisé en ce que** l'au moins un bloc (3) est monté en relief sur la surface de montage (22).

8. Système selon l'une quelconque des revendications précédentes, **caractérisé en ce que** l'au moins un bloc (3) est conformé en vue de, ou porte un symbole graphique de façon à, rappeler l'au moins un élément d'information présent dans la mémoire (31) du dispositif électronique (30).

9. Système selon l'une quelconque des revendications précédentes, **caractérisé en ce qu'**il comprend une pluralité de blocs (3), comprenant chacun un dispositif électronique (30) comprenant à son tour une antenne (32) et une mémoire (31) contenant au moins un élément d'information.

10. Système selon l'une quelconque des revendications précédentes, **caractérisé en ce que** l'information stockée dans la mémoire (31) du dispositif électronique (30) est associée à la réalisation d'un traitement complet de cuisson ou de lavage sur un produit par l'appareil électroménager (2).

11. Procédé de commande d'un appareil électroménager comprenant des moyens de communication à fréquence radioélectrique (21) et un système de commande électronique (23) pour commander au moins une fonction de l'appareil électroménager (2), les moyens de communication (21) et le système de commande (23) étant reliés fonctionnellement les uns avec l'autre ;
**caractérisé en ce que** le procédé comprenant l'étape de placement de manière libérable d'au moins un bloc (3) en contact avec une surface de montage (22) faite sur l'appareil électroménager (2), le bloc (3) comprenant au moins un dispositif électronique (30) comprenant à son tour une mémoire (31) et une antenne (32), le dispositif électronique (30) comprenant, et/ou coïncidant avec, une étiquette RFID (300) qui intègre la mémoire (31) et l'antenne (32) et les moyens de communication à fréquence radioélectrique (21) comprenant un lecteur RFID (210), et ayant dans la mémoire (31) au moins un élément d'information prédéterminé, au moins lorsque l'au moins un bloc (3) est en contact avec la surface de montage (22) le dispositif électronique correspondant (30) pouvant interagir avec les moyens de communication (21) par le biais de l'antenne (32) afin de transférer au système de commande (23) l'au moins un élément d'information présent dans la mémoire (31), l'au moins un bloc (3) et la surface de montage (22) en combinaison constituant une interface utilisateur (4) permettant de commander l'appareil électroménager (2).

12. Procédé selon la revendication 11, **caractérisé en ce que** l'appareil électroménager (2) comprend un compartiment de traitement de produit (20) équipé d'une porte (200), le procédé comprenant les étapes de :
- placement de produits à traiter dans le compartiment de traitement (20) :
- fermeture de la porte (200) ;
l'étape de placement du bloc (3) en contact avec la surface de montage (22) combinée avec l'étape de fermeture de la porte (200) déterminant le début du cycle de traitement associé à l'élément d'information présent dans la mémoire (31) du dispositif électronique (30) constituant une partie de l'au moins un bloc (3) placé en contact avec la surface de montage (22).

13. Procédé selon la revendication 11 ou 12, **caractérisé en ce qu'**il comprend l'étape de retrait de l'au moins un bloc (3) de la surface de montage (22) de l'appareil électroménager (2) afin d'ordonner au système de commande (23) d'interrompre une fonction activée par l'au moins un élément d'information transféré aux moyens de communication (21) par le dispositif électronique (30) constituant une partie du bloc (3) qui a été précédemment placé en contact avec la surface de montage (22) de l'appareil électroménager (2).

14. Procédé selon la revendication 11 ou 12 ou 13, **caractérisé par** la liaison de façon libérable du bloc (3) et de la surface de montage (22) au moyen des moyens de liaison libérables (9) au moins partiellement réalisés dans l'au moins un bloc (3) et/ou dans la surface de montage (22).
